# EUROPEAN PATENT APPLICATION

(11) **EP 4 765 329 A1**
(43) Date of publication of application: **24.06.2026**
(21) Application number: 24907833.8
(22) Date of filing: 25.11.2024
(51) Int. Cl.: H01M 10/613, H01M 10/6551, H01M 10/6556, H01M 50/242, H01M 10/6568

(54) **BATTERY MODULE**

(30) Priority: 18.12.2023 KR 20230184839
(71) Applicant: LG Energy Solution, Ltd., Seoul 07335 (KR)
(72) Inventor: SEON, Sang Ok, Daejeon 34122 (KR); KIM, Jee Won, Daejeon 34122 (KR)
(74) Representative: Plasseraud IP
(86) International application number: PCT/KR2024/018728
(87) International publication number: WO 2025/135548

(57) **Abstract**

The present disclosure relates to a battery module, and a battery module according to one aspect of the present disclosure may include a housing; and a battery assembly including a battery cell accommodated inside the housing, an inner heat transfer member surrounding a perimeter of the battery cell, and an outer heat transfer member surrounding an outer surface of the inner heat transfer member along the perimeter of the battery cell, wherein one heat transfer member of the inner heat transfer member and the outer heat transfer member may be made of a material having greater elasticity or fluidity than the other heat transfer member.

## Description

### TECHNICAL FIELD

### CROSS-REFERENCE TO RELATED APPLICATIONS

The present application claims priority to Korean Patent Application No. 10-2023-0184839 filed on December 18, 2023 in the Republic of Korea, the disclosures of which are incorporated herein by reference.

### TECHNICAL FIELD

The present disclosure relates to a battery module, and more specifically, to a battery module having a plurality of battery cells.

### BACKGROUND ART

Secondary batteries have been applied to small-sized applications such as mobile devices or laptop computers, but recently, the research direction has been expanded to medium and large-sized applications, and they are widely used in applications requiring high voltage and large capacity in relation to energy storage systems (ESSs) or electric vehicles (EVs). Battery cells including such secondary batteries may be accommodated and fixed in a module housing to form a battery module.

Meanwhile, to prevent performance degradation or breakage due to external impact or vibration, the battery cells need to be fixed in place inside the module housing. Additionally, to solve problems such as performance degradation or explosion of the battery module, the battery cells need to be cooled.

To this end, in conventional battery modules, battery cells were fixed to the bottom surface of the module housing filled with thermal resin. Since the thermal resin has predetermine adhesive properties and heat transfer performance, it may stably fix the battery cells to the inner wall of the housing, while also performing the function of releasing the heat of the battery cells to the outside of the housing.

However, if the battery cells are repeatedly charged and discharged several times during the operation of the battery module, swelling of the battery cell may occur. As a result, in conventional battery modules, cracks may occur due to expansion or contraction of the battery cells in the cured thermal resin used to fix the battery cells. These cracks not only prevent the battery cells from being stably fixed inside the housing, but also have the problem of reducing cooling performance.

Accordingly, there is an urgent need to develop a battery module in which battery cells may be stably cooled and fixed in place without causing cracks due to expansion or contraction of the battery cells.

### SUMMARY

### TECHNICAL PROBLEM

The present disclosure is designed to solve the problems of the related art, and therefore the present disclosure is directed to providing a battery module in which battery cells may be stably cooled and fixed in place without causing cracks due to expansion or contraction of the battery cells.

Technical problems of the present disclosure are not limited to the above-described problems, and other problems not mentioned herein may be clearly understood by those having ordinary skill in the art from the following description of the present disclosure.

### TECHNICAL SOLUTION

According to one aspect of the present disclosure, there is provided a battery module including a housing; and a battery assembly including a battery cell accommodated inside the housing, an inner heat transfer member surrounding a perimeter of the battery cell, and an outer heat transfer member surrounding an outer surface of the inner heat transfer member along the perimeter of the battery cell, wherein one of the inner heat transfer member and the outer heat transfer member is made of a material having greater elasticity or fluidity than the other heat transfer member.

At this time, the one heat transfer member may be an outer heat transfer member, and the outer heat transfer member may be deformable in shape in response to expansion or contraction of the battery cell.

At this time, the outer heat transfer member may be composed of a thermal conductive pad, a thermal conductive gel, or a thermal conductive rubber.

At this time, the other heat transfer member may be the inner heat transfer member, and the inner heat transfer member may be made of a material having higher thermal conductivity than the outer heat transfer member.

At this time, the inner heat transfer member may be made of a graphite sheet.

At this time, the battery assembly may be configured in plurality and arranged in a row along one direction.

At this time, the battery module may further include a first heat sink provided on one side of the battery assembly to transfer heat generated from the battery cell to the outside.

At this time, the first heat sink may include a plate-shaped heat sink plate that is in contact with an outer surface of the battery assembly and faces an inner wall of the housing.

At this time, the first heat sink may further include a fin-shaped heat sink fin protruding from the heat sink plate to the outside of the battery assembly.

At this time, between the heat sink plate of the first heat sink and the inner wall of the housing, a first flow space where a cooling fluid capable of absorbing heat emitted from the battery cell is flowable may be provided.

At this time, the first heat sink may further include a leakage prevention wall provided along an edge of the heat sink plate to prevent a cooling fluid of the first flow space from leaking toward the edge of the heat sink plate.

At this time, the leakage prevention wall may have the shape of a partition wall interposed between the heat sink plate and the inner wall of the housing.

At this time, the battery module may further include a pump for circulating the cooling fluid flowing out from one side of the first flow space to the other side of the first flow space.

At this time, the pump may be configured to operate by energy stored in the battery cell.

At this time, the one side and the other side of the first flow space may be spaced apart in the longitudinal direction of the battery cell.

At this time, the battery module may further include a second heat sink provided on the other side of the battery assembly to transfer heat generated from the battery cell to the outside.

At this time, the first heat sink and the second heat sink may be disposed opposite to each other with the battery assembly in between.

At this time, the housing may include a first plate facing the first heat sink; and a second plate facing the second heat sink, wherein the first heat sink may include a first heat sink plate forming a first flow space where a cooling fluid is flowable between the first plate and the first heat sink plate, and the second heat sink may include a second heat sink plate forming a second flow space where a cooling fluid is flowable between the second plate and the second heat sink plate, wherein the first flow space and the second flow space may be connected to each other to allow the cooling fluid to circulate.

At this time, the battery module may further include first and second flow path forming members fluidly connecting the first flow space and the second flow space; and a pump for circulating a cooling fluid in the first flow space and the second flow space.

At this time, the first flow space and the second flow space may be spaced apart vertically, wherein the cooling fluid may fall by gravity from the first flow space to the second flow space through the first flow path forming member, and the cooling fluid may be raised by the pump from the second flow space to the first flow space through the second flow path forming member.

### ADVANTAGEOUS EFFECTS

According to one aspect of the present disclosure, a heat transfer member having a predetermined fluidity or elasticity to allow the shape to be deformed is configured to surround the outer surface of the battery cell, so that cracks due to expansion or contraction of the battery cell may not occur. Accordingly, the battery cell may be stably supported and cooled inside the housing.

According to one aspect of the present disclosure, any one of the inner heat transfer member and the outer heat transfer member constituting the heat transfer member is made of a material having a higher thermal conductivity than the other, so that heat generated in a local part (or a local region) of the battery cell may be more rapidly diffused and released.

According to one aspect of the present disclosure, the heat sink is in contact with the outside of the battery assembly and is configured to receive heat from the battery cell and release it to the outside, so that the battery cell may be cooled more effectively.

According to one aspect of the present disclosure, a flow space where a cooling fluid may flow is provided between the heat sink plate of the heat sink and the inner wall of the housing, so that the heat generated in the battery cell may be more rapidly diffused and released by the cooling fluid.

According to one aspect of the present disclosure, multiple flow spaces are provided between the housing and the heat sink, and a pump is provided for circulating the cooling fluid along the multiple flow spaces, so that heat dissipation by the cooling fluid may be performed more effectively.

Effects to be obtained by the present disclosure are not limited to the above-described effects, and other effects not mentioned herein may be clearly understood by those having ordinary skill in the art from this specification and the accompanying drawings.

### BRIEF DESCRIPTION OF THE DRAWINGS

FIG. 1 is a perspective view of a battery module according to an embodiment of the present disclosure, viewed from above.
FIG. 2 is a view showing a state in which a side plate of a housing is cut away in the battery module of FIG. 1 so that the inside thereof can be seen.
FIG. 3 is an exploded perspective view of the battery module shown in FIG. 2.
FIG. 4 is a cross-sectional view taken along line I-I of FIG. 1.
FIG. 5 is an enlarged view of part A of FIG. 4.

### DETAILED DESCRIPTION

Preferred embodiments of the present disclosure will be described in detail to enable those skilled in the art to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

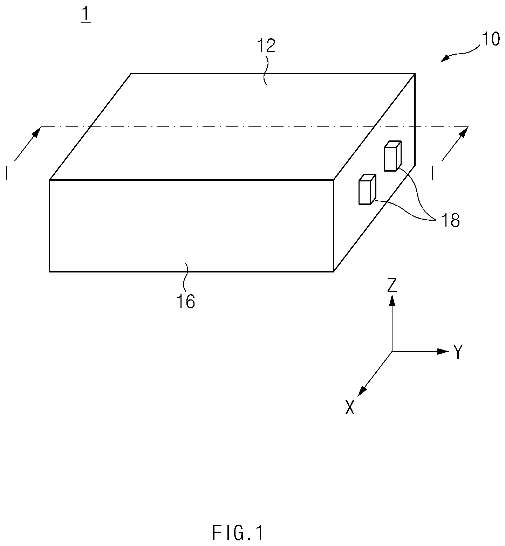

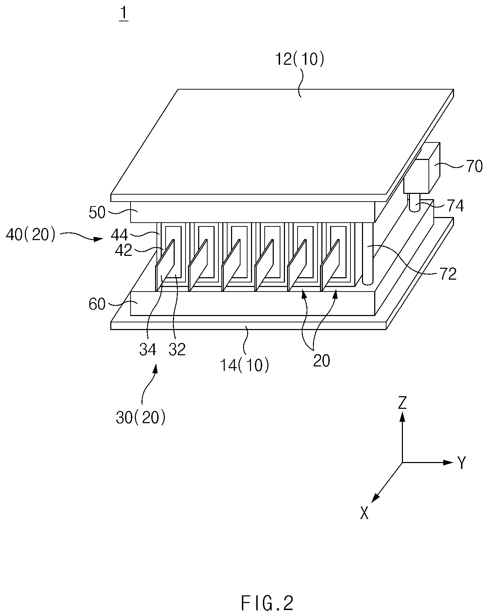

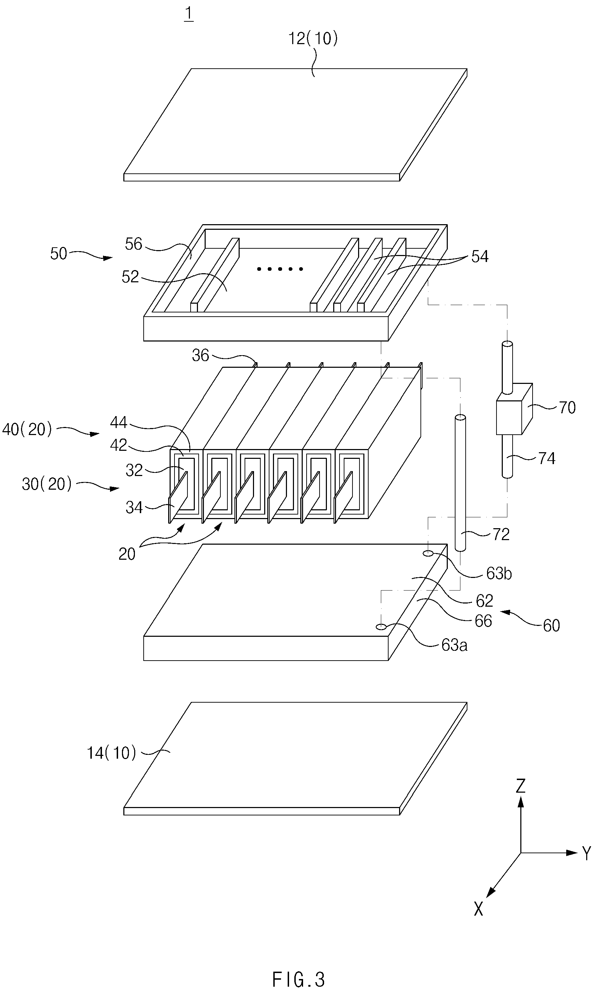

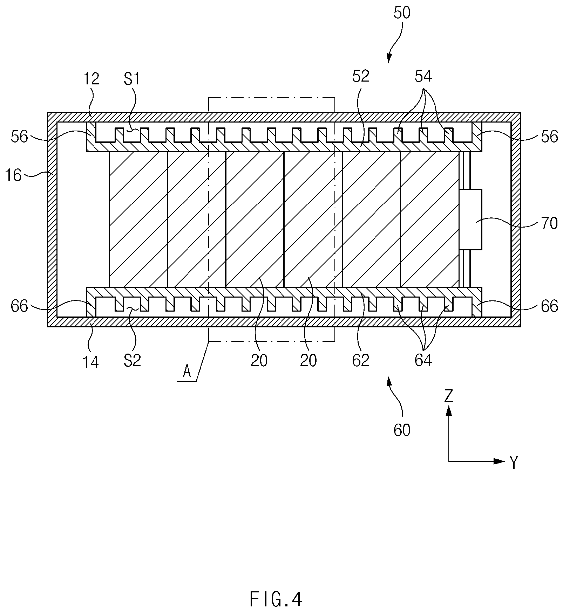

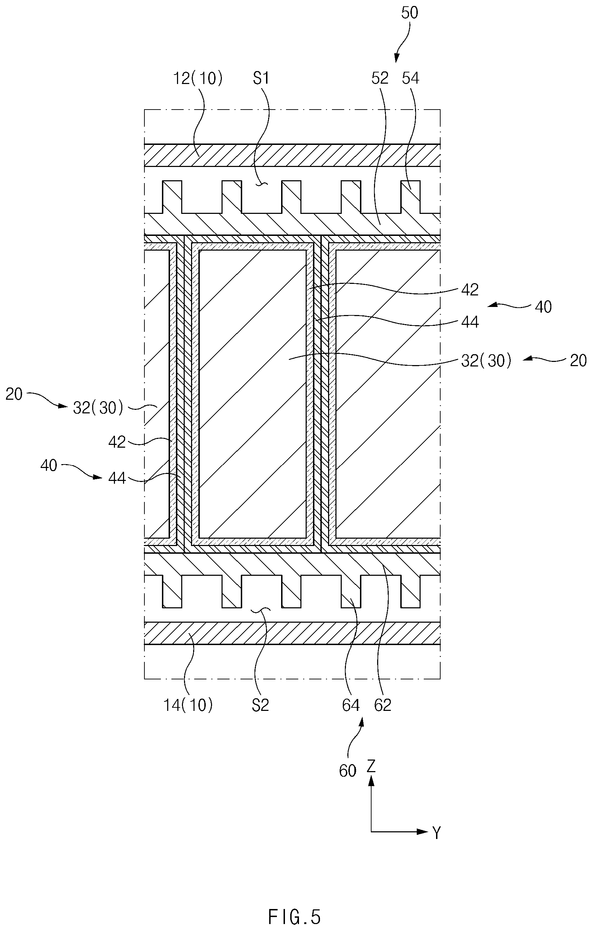

FIG. 1 is a perspective view of a battery module according to an embodiment of the present disclosure, viewed from above. FIG. 2 is a view showing a state in which a side plate of a housing is cut away in the battery module of FIG. 1 so that the inside thereof can be seen. FIG. 3 is an exploded perspective view of the battery module shown in FIG. 2. FIG. 4 is a cross-sectional view taken along line I-I of FIG. 1. FIG. 5 is an enlarged view of part A of FIG. 4.

In FIGS. 1 to 5, a battery module 1 according to an embodiment of the present disclosure is disclosed. Referring to FIGS. 1 and 2, the battery module 1 according to an embodiment of the present disclosure may be a module capable of charging and storing electric energy or discharging the stored electric energy to the outside. To this end, the battery module 1 may include a housing 10 and a battery cell 30 provided inside the housing 10.

At this time, in this embodiment, a heat transfer member 40 having a predetermined thermal conductivity, fluidity, and/or elasticity is provided around the outer perimeter of the battery cell 30. Accordingly, the battery cell 30 may be stably fixed inside the housing 10 even when expanding or contracting, and may also be smoothly cooled through the heat transfer member 40.

Hereinafter, each component of the battery module 1 according to an embodiment of the present disclosure will be described in more detail.

The battery module 1 according to an embodiment of the present disclosure may include a housing 10. In this embodiment, the housing 10 may be configured to accommodate and protect other components of the battery module 1. To this end, the housing 10 may be made of a metal or reinforced plastic having a predetermined rigidity. Accordingly, the components accommodated in the housing 10 may be protected from external impact or contamination.

In this embodiment, the housing 10 may be provided as a box-shaped structure. More specifically, the housing 10 may include an upper plate 12 and a lower plate 14 that are spaced apart in the vertical direction (Z-axis direction) and parallel to each other. As a result, a predetermined space may be formed between the upper plate 12 and the lower plate 14. Other components of the battery module 1 may be disposed in the space.

In this embodiment, the housing 10 may further include a side plate 16. The side plate 16 may be a plate surrounding the perimeter of the space between the upper plate 12 and the lower plate 14. As a result, the space between the upper plate 12 and the lower plate 14 may be isolated and protected from the outside.

Meanwhile, in this embodiment, the housing 10 is provided as a box-shaped hexahedral structure, but the shape of the housing 10 may be modified as necessary in consideration of the arrangement or shape of the components accommodated therein. As an example, the housing 10 may have a shape in which at least a portion is curved.

Referring to FIGS. 2 to 5, the battery module 1 according to an embodiment of the present disclosure may include a battery assembly 20. The battery assembly 20 may be accommodated inside the housing 10 and configured to charge or discharge electric energy.

In this embodiment, the battery assembly 20 may be configured in plurality and arranged in a row along the left-right direction (Y-axis direction). However, the number or arrangement of the battery assembly 20 is not particularly limited.

In this embodiment, the battery assembly 20 may include a battery cell 30. At this time, the battery cell 30 may be a pouch-type secondary battery. As shown, the battery cell 30 in this embodiment may include a pouch-shaped cell body 32 in which an electrode stack where a positive electrode and a negative electrode are stacked is accommodated. The electrode stack of the cell body 32 may perform the function of charging and discharging the electric energy described above.

In this embodiment, the battery cell 30 may include a pair of electrode leads 34, 36 provided at the front (positive direction of the X-axis) and the rear (negative direction of the X-axis) of the cell body 32, respectively. Of course, the pair of electrode leads 34, 36 may be positioned together at the front (positive direction of the X-axis) or the negative direction (negative direction of the X-axis) of the cell body 32.

Although not specifically shown, the electrode leads 34, 36 of the battery cell 30 may be electrically connected to the electrode leads 34, 36 of another battery cell 30 in a predetermined manner. For example, the battery cells 30 may be connected in series or in parallel with each other. To this end, a busbar or the like may be provided between the battery cells 30.

Meanwhile, the battery cell 30 may expand or contract while undergoing a charging and discharging process. The expansion phenomenon may be expressed as swelling. Such expansion or contraction of the battery cell 30 may apply a predetermined force to the components surrounding the battery cell 30, which may cause cracks.

Such cracks may not only deteriorate the structural stability of this battery module 1, but also deform the components surrounding the battery cell 30, thereby hindering heat transfer (i.e., cooling) between the battery cell 30 and the surrounding components.

To solve this problem, the battery assembly 20 according to an embodiment of the present disclosure may further include a heat transfer member 40. In this embodiment, the heat transfer member 40 may be composed of an inner heat transfer member 42 and an outer heat transfer member 44 that have different physical properties. At this time, the physical properties may be thermal conductivity, elasticity, and/or fluidity.

Referring to FIGS. 2 to 5 again, in this embodiment, the inner heat transfer member 42 may surround the outer surface of the cell body 32 in a perimeter direction. At this time, the perimeter direction of the cell body 32 may be a direction that surrounds the outer surface of the cell body 32 centered on the front-back direction (X-axis direction).

In this embodiment, the inner heat transfer member 42 may be made of a material having higher thermal conductivity (or thermal diffusivity) than the outer heat transfer member 44 to be described later. As an example, the inner heat transfer member 42 may be made of a graphite sheet that surrounds the outer surface of the cell body 32.

In this embodiment, since the inner heat transfer member 42 has high thermal conductivity (or thermal diffusivity), the heat generated in the cell body 32 may be rapidly diffused in various directions. That is, the inner heat transfer member 42 may rapidly diffuse the heat generated in a local part (or a local region) of the cell body 32 in various directions, thereby it is capable of widening the surface area to which the heat generated in the cell body 32 may be transferred.

Specifically with reference to FIGS. 3 to 5, as an example, it may be assumed that a large amount of heat is locally generated in the upper part (positive direction of the Z-axis) of the center of the cell body 32. Hereinafter, the above part is referred to as a heat generating part. In this case, the heat generated in the cell body 32 may be intensively transferred to a part of the inner heat transfer member 42 that is in direct contact with the heat generating part.

In the above situation, the inner heat transfer member 42 may rapidly diffuse (or transfer) the heat generated in the heat generating part in various directions. Specifically, the inner heat transfer member 42 may rapidly diffuse (or transfer) the heat transferred through the heat generating part in the front-back direction (X-axis direction) and the perimeter direction of the cell body 32.

As a result, the heat locally generated in the cell body 32 may be entirely diffused (or transferred) to the inner heat transfer member 42. And, the heat transferred to the inner heat transfer member 42 may be released through the wide outer surface of the inner heat transfer member 42. In this embodiment, the heat diffused by the inner heat transfer member 42 is released through the outer heat transfer member 44, which will be described in detail later.

As such, in the battery module 1 according to an embodiment of the present disclosure, the surface area where the heat generated in the battery cell 30 is released may be rapidly expanded to the outer surface of the inner heat transfer member 42. Through this, the battery cell 30 of the battery module 1 according to an embodiment of the present disclosure may be cooled more effectively.

Meanwhile, in this embodiment, the outer heat transfer member 44 may be configured to surround the outer surface of the inner heat transfer member 42. As shown, the outer heat transfer member 44 may surround the outer surface of the inner heat transfer member 42 in the perimeter direction of the cell body 32.

At this time, in this embodiment, the outer heat transfer member 44 may be made of a material having greater elasticity and/or fluidity than the inner heat transfer member 42 described above. This may be to allow the outer heat transfer member 44 to be deformed in response to expansion or contraction of the battery cell 30.

As a result, cracks may not occur in the outer heat transfer member 44 supporting the battery cell 30. Such characteristics of the outer heat transfer member 44 may prevent deterioration of the structural stability and cooling performance of this battery module 1.

Meanwhile, in this embodiment, the outer heat transfer member 44 may have a predetermined thermal conductivity. This may be to allow the outer heat transfer member 44 to smoothly release heat transferred through the outer surface of the inner heat transfer member 42 to the outside of the battery assembly 20.

To this end, the outer heat transfer member 44 of the battery module 1 according to an embodiment of the present disclosure may be composed of a thermal conductive pad, a thermal conductive gel, or a thermal conductive rubber.

However, the material of the outer heat transfer member 44 is not limited to the above-described one, and the outer heat transfer member 44 may be made of various materials having a predetermined elasticity or fluidity to be deformed in response to expansion or contraction of the battery cell 30, while also having a predetermined thermal conductivity to release the heat transferred from the inner heat transfer member 42.

As described above, in the battery module 1 according to an embodiment of the present disclosure, the battery cell 30 is surrounded by the heat transfer member 40, and thus the locally generated heat may be rapidly diffused (or transferred) in various directions, while cracks due to expansion or contraction of the battery cell 30 may not occur. Accordingly, the battery cell 30 may be stably supported inside the housing 10, while the battery cell 30 may be effectively cooled.

Meanwhile, in this embodiment, it has been described on the premise that the battery cell 30 is a pouch-type secondary battery. However, the structure or type of the battery cell 30 is not particularly limited. For example, the battery cell 30 may be a cylindrical secondary battery. In this case, the heat transfer member 40 may be configured to surround the outer periphery of the cylindrical battery cell 30.

Referring to FIGS. 2 to 4 again, the battery module 1 according to an embodiment of the present disclosure may further include heat sinks 50, 60. In this embodiment, the heat sinks 50, 60 may be structures for more smoothly releasing heat generated in the battery assembly 20 to the outside of the battery module 1.

To this end, the heat sinks 50, 60 according to this embodiment may be made of a material having high thermal conductivity. As an example, the heat sinks 50, 60 may be made of aluminum (Al) or the like, but are not limited thereto.

Referring to FIGS. 2 to 4, the heat sinks 50, 60 of the battery module 1 according to an embodiment of the present disclosure may include an upper heat sink 50. The upper heat sink 50 may be in contact with the upper portion of the battery assembly 20.

In this embodiment, the upper heat sink 50 may be configured to release heat emitted from the battery cell 30 to the upper side (positive direction of the Z-axis) of the housing 10. To this end, the upper heat sink 50 may be disposed to face the upper plate 12 of the housing 10.

In this embodiment, the upper heat sink 50 may include a heat sink plate 52 in surface contact with the upper surface of the battery assembly 20. At this time, the heat sink plate 52 may have a sufficient width and length in the front-back direction (X-axis direction) and left-right direction (Y-axis direction) to contact each of the plurality of battery assemblies 20 arranged in a row. This configuration may allow the heat sink plate 52 to directly contact and exchange heat with each of the battery assemblies 20.

In this embodiment, the heat sink plate 52 may be parallel to the upper plate 12 and spaced apart in the vertical direction (Z-axis direction). Accordingly, a predetermined space may be formed between the heat sink plate 52 and the upper plate 12. Hereinafter, the space is referred to as an upper flow space S1.

In such an upper flow space S1, a predetermined cooling fluid flows, and heat from the upper heat sink 50 may be released to the upper plate 12 or the outside. As an example, the cooling fluid may be water, but the type of the cooling fluid is not particularly limited.

Meanwhile, in this embodiment, the upper heat sink 50 may include a fin-shaped heat sink fin 54 protruding from the heat sink plate 52 toward the outside of the battery assembly 20. Such a heat sink fin 54 may increase the surface area where heat transferred from the battery cell 30 to the heat sink plate 52 is released upward (in the positive direction of the Z-axis).

More specifically, the heat sink fin 54 may protrude upward from the heat sink plate 52. In other words, the heat sink fin 54 may protrude from the heat sink plate 52 toward the upper plate 12.

At this time, in this embodiment, the upper (positive direction of the Z-axis) end of the heat sink fin 54 may be spaced apart from the upper plate 12 by a predetermined distance in the vertical direction (Z-axis direction). This configuration may be to allow the cooling fluid to flow into the upper flow space S1 provided therebetween. Accordingly, the cooling fluid may flow in the upper flow space S1 in the left-right direction (Y-axis direction) and exchange heat.

Meanwhile, in this embodiment, the heat sink fin 54 may extend long in the front-back direction (X-axis direction) . And, the heat sink fin 54 may be configured in plurality and may be spaced apart in the left-right direction (Y-axis direction). The extension direction and arrangement direction of the heat sink fin 54 are not particularly limited.

At this time, the upper heat sink 50 of the battery module 1 according to an embodiment of the present disclosure may further include a leakage prevention wall 56. The leakage prevention wall 56 may be configured to prevent the cooling fluid flowing in the above-described upper flow space S1 from leaking toward the edge of the heat sink plate 52. Through this, the battery cell 30 may be isolated from the cooling fluid.

In this embodiment, the leakage prevention wall 56 may protrude upward (in the positive direction of the Z-axis) from the edge side of the heat sink plate 52. In other words, the leakage prevention wall 56 may have the shape of a partition wall interposed between the heat sink plate 52 and the lower surface of the upper plate 12.

At this time, in this embodiment, the end of the leakage prevention wall 56 may be in contact with the lower surface of the upper plate 12. Accordingly, the cooling fluid may be prevented from leaking between the leakage prevention wall 56 and the upper plate 12.

And, in this embodiment, the leakage prevention wall 56 may be provided along the edge of the upper heat sink plate 52. In other words, when viewed in the vertical direction (Z-axis direction), the leakage prevention wall 56 may have a ring shape entirely surrounding the heat sink plate 52. Therefore, leakage of the cooling fluid from the entire edge section of the heat sink plate 52 may be prevented.

As described above, in the battery module 1 according to an embodiment of the present disclosure, an upper heat sink 50 is provided on the upper side of the battery assembly 20, so that heat generated from the battery cell 30 may be rapidly released to the outside of the housing 10. Through this, the battery cell 30 may be cooled more effectively.

Referring to FIGS. 2 to 4 again, the heat sinks 50, 60 of the battery module 1 according to an embodiment of the present disclosure may include a lower heat sink 60. The lower heat sink 60 may be in contact with the lower side of the battery assembly 20.

In this embodiment, the lower heat sink 60 may be configured to release heat emitted from the battery cell 30 to the lower side (negative direction of the Z-axis) of the housing 10. To this end, the lower heat sink 60 may be disposed to face the lower plate 14 of the housing 10.

In this embodiment, the lower heat sink 60 may include a heat sink plate 62 in surface contact with the lower surface of the battery assembly 20. At this time, the heat sink plate 62 may have a sufficient width and length in the front-back direction (X-axis direction) and left-right direction (Y-axis direction) to contact each of the plurality of battery assemblies 20 arranged in a row. This configuration may allow the heat sink plate 62 to directly contact and exchange heat with each of the battery assemblies 20.

In this embodiment, the heat sink plate 62 may be parallel to the lower plate 14 and spaced apart in the vertical direction (Z-axis direction). Accordingly, a predetermined space may be formed between the heat sink plate 62 and the lower plate 14. Hereinafter, this is referred to as a lower flow space S2.

In such a lower flow space S2, a predetermined cooling fluid flows, and heat from the lower heat sink 60 may be released to the lower plate 14 or the outside. At this time, in this embodiment, the cooling fluid flowing in the lower flow space S2 may be the same type of fluid as the fluid flowing in the upper flow space S1 described above.

And, in this embodiment, the upper flow space S1 and the lower flow space S2 may be configured to be fluidly connected to each other so that the cooling fluid circulates therethrough. This will be described later together with the pump 70 and the flow path forming members 72, 74.

Meanwhile, in this embodiment, the lower heat sink 60 may include a fin-shaped heat sink fin 64 protruding from the heat sink plate 62 toward the outside of the battery assembly 20. Such a heat sink fin 64 may increase the surface area where heat transferred from the battery cell 30 to the heat sink plate 62 is released upward (in the positive direction of the Z-axis).

More specifically, the heat sink fin 64 may protrude downward (in the negative direction of the Z-axis) from the heat sink plate 62. In other words, the heat sink fin 64 may protrude from the heat sink plate 62 toward the lower plate 14.

At this time, in this embodiment, the lower (negative direction of the Z-axis) end of the heat sink fin 64 may be somewhat spaced apart from the lower plate 14 in the vertical direction (Z-axis direction). This configuration may be to allow the cooling fluid to flow into the lower flow space S2 provided therebetween. Accordingly, the cooling fluid may flow in the lower flow space S2 in the left-right direction (Y-axis direction) and exchange heat.

Meanwhile, in this embodiment, the heat sink fin 64 may extend long in the front-back direction (X-axis direction) . And, the heat sink fin 64 may be configured in plurality and may be spaced apart in the left-right direction (Y-axis direction). The extension direction and arrangement direction of the heat sink fin 64 are not particularly limited.

At this time, the lower heat sink 60 of the battery module 1 according to an embodiment of the present disclosure may further include a leakage prevention wall 66. The leakage prevention wall 66 may be configured to prevent the cooling fluid flowing in the above-described lower flow space S2 from leaking toward the edge of the heat sink plate 62.

In this embodiment, the leakage prevention wall 66 may protrude downward (in the negative direction of the Z-axis) from the edge side of the heat sink plate 62. In other words, the leakage prevention wall 66 may have the shape of a partition wall interposed between the heat sink plate 62 and the upper surface of the lower plate 14.

At this time, in this embodiment, the end of the leakage prevention wall 66 may be in contact with the lower surface of the lower plate 14. Accordingly, the cooling fluid may be prevented from leaking between the leakage prevention wall 66 and the lower plate 14.

And, in this embodiment, the leakage prevention wall 66 may be provided along the edge of the upper heat sink plate 62. In other words, when viewed in the vertical direction (Z-axis direction), the leakage prevention wall 66 may have a ring shape entirely surrounding the heat sink plate 62. Through this, leakage of the cooling fluid from the entire edge section of the heat sink plate 62 may be prevented.

As described above, in the battery module 1 according to an embodiment of the present disclosure, a lower heat sink 60 is provided on the lower side of the battery assembly 20, so that heat generated from the battery cell 30 may be rapidly released to the outside of the housing 10. Through this, the battery cell 30 may be cooled more effectively.

Referring to FIGS. 2 to 4, in the battery module 1 according to an embodiment of the present disclosure, the cooling fluid may circulate through the upper flow space S1 and the lower flow space S2 and transfer heat.

To this end, the battery module 1 according to an embodiment of the present disclosure may further include a pump 70 and flow path forming members 72, 74. In this embodiment, the flow path forming members 72, 74 may be members for fluidly connecting the upper flow space S1 and the lower flow space S2 to each other. The flow path forming members 72, 74 may be formed of a hose or a pipe, but is not particularly limited as long as it may connect the flow spaces S1, S2 to each other.

In this embodiment, the flow path forming members 72, 74 may include a first flow path forming member 72 and a second flow path forming member 74. The first flow path forming member 72 may be a member that forms a flow path from the upper flow space S1 to the lower flow space S2, and the second flow path forming member 74 may be a member that forms a flow path from the lower flow space S2 to the upper flow space S1.

In this embodiment, the first flow path forming member 72 may fluidly connect a portion of the upper flow space S1 in the front (positive direction of the X-axis) and right (positive direction of the Y-axis) and a portion of the lower flow space S2 in the front (positive direction of the X-axis) and right (positive direction of the Y-axis). The cooling fluid may flow along the first flow path forming member 72 and fall in a downward direction (negative direction of the Z-axis) by gravity.

In this embodiment, the first flow path forming member 72 may be through-coupled at an upper end to the heat sink plate 52 of the upper heat sink 50 and at a lower end to the heat sink plate 62 of the lower heat sink 60. To this end, the heat sinks 52, 62 may be provided with predetermined coupling holes 63a.

In this embodiment, the second flow path forming member 74 may fluidly connect a portion of the upper flow space S1 in the rear (negative direction of the X-axis) and right (positive direction of the Y-axis) and a portion of the lower flow space S2 in the rear (negative direction of the X-axis) and right (positive direction of the Y-axis).

That is, the first flow path forming member 72 and the second flow path forming member 74 may be disposed at a predetermined distance in the front-back direction (X-axis direction). As a result, the cooling fluid may flow through the upper flow space S1 and the lower flow space S2 in the front-back direction (X-axis direction) and perform heat exchange (or heat transfer).

And, in this embodiment, the cooling fluid may flow along the second flow path forming member 74 and may be raised in an upward direction (positive direction of the Z-axis). At this time, this flow may be forced against gravity. This flow may be performed by the pump 70 to be described later.

In this embodiment, the second flow path forming member 74 may be through-coupled at an upper end to the heat sink plate 52 of the upper heat sink 50 and at a lower end to the heat sink plate 62 of the lower heat sink 60. To this end, the heat sinks 52, 62 may be provided with predetermined coupling holes 63b.

Meanwhile, in this embodiment, the first flow path forming member 72 and the second flow path forming member 74 are configured to be disposed at a distance in the front-back direction (X-axis direction) on the left side (positive direction of the Y-axis) of the flow spaces S1, S2, but the relative positions of the first flow path forming member 72 and the second flow path forming member 74 may be changed as necessary.

For example, the first flow path forming member 72 and the second flow path forming member 74 may be disposed opposite to each other with the battery assembly 20 in between. In this case, the cooling fluid may flow through the upper flow space S1 and the lower flow space S2 in the front-back direction (X-axis direction) and the left-right direction (Y-axis direction) and perform heat exchange (or heat transfer).

The pump 70 of the battery module 1 according to an embodiment of the present disclosure may be configured to raise the cooling fluid. To this end, the pump 70 may be provided in the second flow path forming member 74. Of course, the type or position of the pump 70 is not particularly limited as long as it may raise the cooling fluid from the lower flow space S2 to the upper flow space S1.

At this time, in this embodiment, the pump 70 may be electrically connected to at least one of the plurality of battery cells 30 and configured to operate by receiving electrical energy therefrom.

According to this configuration, the state of the battery cell 30 may be indirectly confirmed from the operating state of the pump 70. For example, if the pump 70 no longer operates, it may be determined that the battery cell 30 is discharged or broken.

Meanwhile, the upper plate 12 and the lower plate 14 of the battery module 1 according to this embodiment may be named as a first plate and a second plate, respectively, the upper heat sink 50 and the lower heat sink 60 may be named as a first heat sink and a second heat sink, respectively, and the upper flow space S1 and the lower flow space S2 may be named as a first flow space and a second flow space, respectively.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

1: Battery module
10: Housing
20: Battery assembly
30: Battery cell
40: Heat transfer member
50, 60: Heat sink
70: Pump
72, 74: Flow path forming member

## Claims

1. A battery module comprising:
a housing; and
a battery assembly comprising a battery cell accommodated inside the housing, an inner heat transfer member surrounding a perimeter of the battery cell, and an outer heat transfer member surrounding an outer surface of the inner heat transfer member along a perimeter of the battery cell,
wherein one of the inner heat transfer member and the outer heat transfer member is made of a material having greater elasticity or fluidity than the other heat transfer member.

2. The battery module according to claim 1,
wherein the one heat transfer member is an outer heat transfer member, and
the outer heat transfer member is deformable in shape in response to expansion or contraction of the battery cell.

3. The battery module according to claim 2,
wherein the outer heat transfer member is composed of a thermal conductive pad, a thermal conductive gel, or a thermal conductive rubber.

4. The battery module according to claim 1,
wherein the other heat transfer member is the inner heat transfer member, and
the inner heat transfer member is made of a material having higher thermal conductivity than the outer heat transfer member.

5. The battery module according to claim 4,
wherein the inner heat transfer member is made of a graphite sheet.

6. The battery module according to claim 1,
wherein the battery assembly is configured in plurality and arranged in a row along one direction.

7. The battery module according to claim 1, further comprising:
a first heat sink provided on one side of the battery assembly to transfer heat generated from the battery cell to the outside.

8. The battery module according to claim 7,
wherein the first heat sink comprises a plate-shaped heat sink plate that is in contact with an outer surface of the battery assembly and faces an inner wall of the housing.

9. The battery module according to claim 8,
wherein the first heat sink further comprises a fin-shaped heat sink fin protruding from the heat sink plate to the outside of the battery assembly.

10. The battery module according to claim 8,
wherein between the heat sink plate of the first heat sink and the inner wall of the housing, a first flow space where a cooling fluid capable of absorbing heat emitted from the battery cell is flowable is provided.

11. The battery module according to claim 10,
wherein the first heat sink further comprises a leakage prevention wall provided along an edge of the heat sink plate to prevent a cooling fluid of the first flow space from leaking toward an edge of the heat sink plate.

12. The battery module according to claim 11,
wherein the leakage prevention wall has the shape of a partition wall interposed between the heat sink plate and the inner wall of the housing.

13. The battery module according to claim 10, further comprising:
a pump for circulating cooling fluid flowing out from one side of the first flow space to the other side of the first flow space.

14. The battery module according to claim 13,
wherein the pump is configured to operate by energy stored in the battery cell.

15. The battery module according to claim 13,
wherein the one side and the other side of the first flow space are spaced apart in a longitudinal direction of the battery cell.

16. The battery module according to claim 7, further comprising:
a second heat sink provided on the other side of the battery assembly to transfer heat generated from the battery cell to the outside.

17. The battery module according to claim 16,
wherein the first heat sink and the second heat sink are disposed opposite to each other with the battery assembly in between.

18. The battery module according to claim 16,
wherein the housing comprises:
a first plate facing the first heat sink; and
a second plate facing the second heat sink,
wherein the first heat sink comprises a first heat sink plate forming a first flow space where a cooling fluid is flowable between the first plate and the first heat sink plate, and
the second heat sink comprises a second heat sink plate forming a second flow space where a cooling fluid is flowable between the second plate and the second heat sink plate,
wherein the first flow space and the second flow space are connected to each other to allow the cooling fluid to circulate.

19. The battery module according to claim 18, further comprising:
first and second flow path forming members fluidly connecting the first flow space and the second flow space; and
a pump for circulating a cooling fluid in the first flow space and the second flow space.

20. The battery module according to claim 19,
wherein the first flow space and the second flow space are spaced apart vertically,
wherein the cooling fluid falls by gravity from the first flow space to the second flow space through the first flow path forming member, and
the cooling fluid is raised by the pump from the second flow space to the first flow space through the second flow path forming member.
